(19) Europäisches Patentamt
European Patent Office
Office européen des brevets

(11) **EP 1 658 237 B1**

(12) **EUROPÄISCHE PATENTSCHRIFT**

(45) Veröffentlichungstag und Bekanntmachung des Hinweises auf die Patenterteilung:
**25.08.2010   Patentblatt 2010/34**

(21) Anmeldenummer: **04764359.8**

(22) Anmeldetag: **21.08.2004**

(51) Int Cl.:
***C02F 1/34*** *(2006.01)*       ***C02F 11/12*** *(2006.01)*

(86) Internationale Anmeldenummer:
**PCT/EP2004/009377**

(87) Internationale Veröffentlichungsnummer:
**WO 2005/028375 (31.03.2005 Gazette 2005/13)**

(54) **VERFAHREN ZUM ZERKLEINERN PARTIKULÄRER ORGAN    ISCHER SUBSTANZEN IN SUSPENSIONEN VON MIKROORGANISMEN**

METHOD FOR THE COMMINUTION OF PARTICULATE ORGANIC SUBSTANCES IN SUSPENSIONS OF MICROORGANISMS

PROCEDE PERMETTANT LA DESINTEGRATION DE SUBSTANCES ORGANIQUES PARTICULAIRES DANS DES SUSPENSIONS DE MICROORGANISMES

(84) Benannte Vertragsstaaten:
**AT BE BG CH CY CZ DE DK EE ES FI FR GB GR HU IE IT LI LU MC NL PL PT RO SE SI SK TR**

(30) Priorität: **29.08.2003   DE 10340282**
**22.09.2003   DE 10343748**

(43) Veröffentlichungstag der Anmeldung:
**24.05.2006   Patentblatt 2006/21**

(73) Patentinhaber: **Bionik GmbH - Innovative Technik für die Umwelt**
**65232 Taunusstein (DE)**

(72) Erfinder:
• **RICHTER, Michael**
**65527 Niedernhausen (DE)**

• **UNGER, Jochem**
**64739 Höchst (DE)**

(74) Vertreter: **Patentanwälte Möll, Bitterich & Dr. Keller**
**Westring 17**
**76829 Landau (DE)**

(56) Entgegenhaltungen:
**WO-A1-03/082753       WO-A1-03/082753**
**DE-A- 10 155 161       US-A- 5 494 585**
**US-A- 5 494 585        US-B1- 6 200 486**
**US-B1- 6 505 648**

## Beschreibung

Die Erfindung betrifft ein Verfahren mit den Merkmalen des Anspruchs 1 zum Zerkleinern partikulärer organischer Substanzen in Suspensionen von Mikroorganismen in einem Trägermedium, insbesondere in Abwässern oder Schlämmen biologischer Kläranlagen.

## Technisches Gebiet:

Bei der Aufbereitung von Abwasser in industriellen und kommunalen biologischen Kläranlagen nach dem sogenannten Belebungsverfahren entsteht durch Verstoffwechselung biologisch abbaubarer Stoffe durch Bakterien Klärschlamm in Form von Bakteriensuspensionen. Da dieser Klärschlamm aufgrund von Gesetzen und wirtschaftlichen Zwängen nur noch in beschränktem Umfang deponiert, verbrannt oder landwirtschaftlich verwertet werden kann, kommt der Verringerung bis hin zur Vermeidung des Aufkommens von Klärschlamm eine immer größere Bedeutung zu.

Als ein Verfahren der Abfallverminderung wurde in den letzten Jahren der mechanische Zellaufschluss (Desintegration) der im Klärschlamm enthaltenen Organismen untersucht. Bei der Desintegration von Klärschlamm ist beabsichtigt, die Zellwände zumindest eines Teils der im Klärschlamm enthaltenen Mikroorganismen zu zerstören und die Zellinhalte freizusetzen.

Dieser Zellaufschluss verfolgt im wesentlichen zwei Zielsetzungen. Zum einen soll die anaerobe Schlammbehandlung durch einen beschleunigten und verstärkten Abbau verbessert werden. Diese Beschleunigung beruht auf der mechanischen Unterstützung der Hydrolyse, da der Zellaufschluss zu einer Freisetzung des leicht abbaubaren Zellinnenwassers führt. Zusätzlich sollen fakultativ anaerobe Mikroorganismen aufgeschlossen werden, die ansonsten teilweise den Faulprozess überleben können und im Faulschlamm für den Restgehalt an organischen Stoffen mit verantwortlich sind. Durch den Zellaufschluss sollen sie dem verstärkten Abbau zugänglich gemacht werden.

Zum anderen soll die Desintegration die Möglichkeit eröffnen, das Zellinnenwasser, das organische Substanzen wie Protein und Polysaccharine enthält, als interne Kohlenstoffquelle zu verwenden. Dadurch sollen sowohl eine Verringerung der Schlammmenge und Faulzeit als auch eine Erhöhung der Menge von energetisch verwertbarem Faulgas erreicht werden. Weitere Vorteile sind unter anderem die Zerstörung von Schwimmschlamm und Fadenbakterien sowie eine Verbesserung der Absetzeigenschaften der Schlämme.

## Stand der Technik:

Einen Überblick über die herkömmlichen mechanischen Desintegrationsverfahren geben N. Dichtl, J. Müller, E. Englmann, F. W. Günthert und M. Osswald in einem Aufsatz "Desintegration von Klärschlamm - ein aktueller Überblick" in "Korrespondenz Abwasser" 1997 (44) Nr. 10, S. 1726 bis 1738 ff. Danach eignen sich für den großtechnischen Einsatz vor allem

- die Rührwerkskugelmühle,
- der Hochdruckhomogenisator und
- der Ultraschallhomogenisator.

Während der Zellaufschluss in der Rührwerkskugelmühle in einem zylindrischen, mit Mahlkugeln aus Hartglas oder Keramik gefüllten Mahlraum durch die Rotation der Kugeln bewirkt wird, werden zum Aufschluss der Zellen im Ultraschall- und im Hochdruckhomogenisator Kavitationsvorgänge genutzt.

Allen bekannten Verfahren zur mechanischen Desintegration ist gemeinsam, dass der Kosten- und Energieaufwand zur Erzeugung der Kavitationsvorgänge, durch welche die eine Aufspaltung der Zellwände der Mikroorganismen bewirkenden Kräfte entstehen, sehr hoch ist. Das gilt sowohl für die Herstellung als auch für den Betrieb und die Wartung von Hochdruck- und Ultraschallhomogenisatoren. Während bei den Hochdruckhomogenisatoren sehr hohe Drücke erzeugt werden müssen, die eine hohe Pumpenkapazität erfordern, wird bei Ultraschallverfahren eine große Menge elektrischer Energie zur Speisung der Sonotroden benötigt. Ein Nachteil der Nutzbarmachung von Kavitationserscheinungen in diesem Zusammenhang ist weiterhin, dass es zu Ablöseerscheinungen an den Geräten und Materialien kommt, weshalb speziell für verschleißintensive Bauteile, wie zum Beispiel die Ultraschallsonotroden, kostspielige Materialien, wie zum Beispiel Titan, verwendet werden müssen.

In der älteren, nicht vorveröffentlichten deutschen Patentanmeldung gemäß DE 102 14 689 A1 ist zur Verringerung des Energie- und Ausrüstungsaufwandes bei der Erzeugung von Kavitationserscheinungen schon vorgeschlagen worden, für den Aufschluss organischer Substanzen nicht maschinen- und energietechnisch aufwändige Ultraschall- oder Hochdruckdesintegratoren einzusetzen, sondern die Suspension unter Druck durch eine Düse mit sich zunächst verengendem und dann wieder erweiterndem Querschnitt, eine sogenannte Lavaldüse, zu fördern. Dabei wird durch die Verringerung des Querschnitts die Fließgeschwindigkeit der Suspension derart erhöht, dass der Druck unter den Dampfdruck der Trägersubstanz, also Wasser, absinkt, während beim Durchströmen des sich anschließend wieder erweiternden Querschnitts durch Druckausgleich kollabierende Kavitationsblasen erzeugt werden.

In der DE 101 55 161 A1 wird ein Verfahren zum Aufschluss von Abwasser, Klärschlamm oder in Biogasanlagen verwendeten organischen Substraten zur Verringerung und Vermeidung der Bildung von Blähschlamm, Schwimmschlamm und/oder Schaum beschrieben. Erfindungsgemäß erfolgt der Aufschluss durch Scherkräfte und durch Kavitation, die mit Hilfe eines Strömungskanals erzeugt wird. Bei dem Verfahren ist ausdrücklich die Erzeugung von Kavitation erwünscht.

Auch in den in den US-Patentschriften US 6,200,486 B1, US 5,494, 585 B1 und US 6,505,648 B1 beschriebenen Verfahren erfolgt der Aufschluss unter Ausnutzung von Kavitationserscheinungen.

Die Behandlung von solchen Suspensionen durch Verfahren mit Kavitationserscheinungen hat zwar einen gewissen Erfolg erbracht, d. h. es gelingt eine Erhöhung der Ausbeute an Faulgas sowie eine Verringerung des Klärschlammanteils, es ist aber nicht zweifelsfrei zu klären, ob diese Wirkungen durch im Strömungskanal auftretende Scherbeanspruchungen, durch das Entstehen und das Zusammenfallen der Kavitationsblasen oder durch andere, bislang nicht zweifelsfrei geklärte Erscheinungen verursacht werden. Jedenfalls hat das Entstehen und Zusammenfallen der Kavitationsblasen in einer Art Implosion im Grunde nur lokale Wirkung, verursacht aber nicht primär eine Zerstörung der Zellen und somit den Aufschluss der Mikroorganismen.

**Darstellung der Erfindung:**

Vor diesem Hintergrund liegt der Erfindung die Aufgabe zugrunde, eine Möglichkeit zu schaffen, durch welche mit ähnlich geringem Material- und Energieaufwand ein gezielter Aufschluss der Mikroorganismen im Sinne einer Zerstörung der Zellen erreicht werden kann.

Gemäß der Erfindung wird diese Aufgabe durch ein Verfahren mit den im Anspruch 1 genannten Merkmalen gelöst.

Vorteilhafte Weiterentwicklungen ergeben sich aus den Unteransprüchen.

Erfindungsgemäß wird die desintegrierende Wirkung auf hydrodynamischem Wege erreicht. Dabei liegt der Erfindung der Gedanke zugrunde, im Zuge der Förderung der Suspension in einem geschlossenen Strömungskanal, insbesondere einer Rohrleitung, einen Wirkraum zu schaffen, in dem die Fließgeschwindigkeit des Trägermediums der Suspension, also des Wassers, so gesteigert wird, dass durch den dadurch bedingten Druckabfall der Dampfdruck deutlich unterschritten wird, so dass nicht nur Kavitationsblasen entstehen, die sogleich wieder zusammenfallen, sondern dass die flüssige Phase praktisch vollständig in Dampf verwandelt wird, der allerdings unmittelbar nach Verlassen dieses Wirkraumes sogleich wieder kondensiert.

Infolge der enormen Vergrößerung des Volumens der flüssigen Phase beim Übergang in den Dampfzustand steigert sich die Strömungsgeschwindigkeit des Mediums im gleichen Ausmaß. Das hat zur Folge, dass auf die Beladung der flüssigen Phase, also auf die Bakterien und sonstigen Partikel, die von dem Dampfstrom mitgerissen werden, extreme Beschleunigungskräfte ausgeübt werden, die unmittelbar darauf bei Kondensation des Dampfes in die flüssige Phase wieder in Verzögerungskräfte übergehen. Infolge der Trägheit der Partikel, insbesondere der Zellkerne gegenüber dem Plasma und der Plasmahaut, werden dabei durch die Aggregatszustandsänderung des die Mikroorganismen umgebenden Trägermediums auf diese Kräfte ausgeübt, die über Veränderungen der Struktur von Schlammflocken und über Veränderungen der Eigenschaften an der Membranoberfläche bereits zu Effekten führen, ohne dass die Mikroorganismen total zerstört und deren Inhaltsstoffe freigesetzt werden. Insbesondere durch Dehnung der Membranoberflächen der Mikroorganismen durch die Trägheitskräfte, die noch nicht zum Zerreißen führen, können schon oberflächenaktive Stoffe von den Mikroorganismen abgelöst werden, bis die Trägheitskräfte schließlich zu einem Zerreißen der Plasmahaut und somit einer Zerstörung der Zellen führen.

Von besonderem Vorteil ist, dass durch entsprechende Wahl der Strömungsgeschwindigkeit des Trägermediums in dem Wirkraum unterschiedliche Behandlungsarten der Suspension gewählt werden können, die vom Aufbrechen großer Flocken über die Zerstörung fadenförmiger Bakterien bis hin zum vollständigen Zellaufschluss reichen.

**Kurze Beschreibung der Zeichnungen:**

Die Erfindung wird nachstehend anhand der Zeichnung näher erläutert. Es zeigt

Fig. 1        eine schematische Darstellung einer Förderstrecke mit Pumpe und Wirkraum nach der Erfindung, die

Fig. 2 und 3        diagrammartige Darstellungen des Druckverlaufs der Suspension im Bereich des Wirkraums,

Fig. 4        eine schematische Darstellung der Bildung eines Wirkraums durch eine Drosselstelle in einer Rohrleitung,

Fig. 5        eine diagrammartige Darstellung unterschiedlicher Behandlungsarten und

Fig. 6        ein Schema einer Desintegrationsanlage mit einer Einrichtung nach der Erfindung.

**Wege zur Ausführung der Erfindung und gewerbliche Verwertbarkeit:**

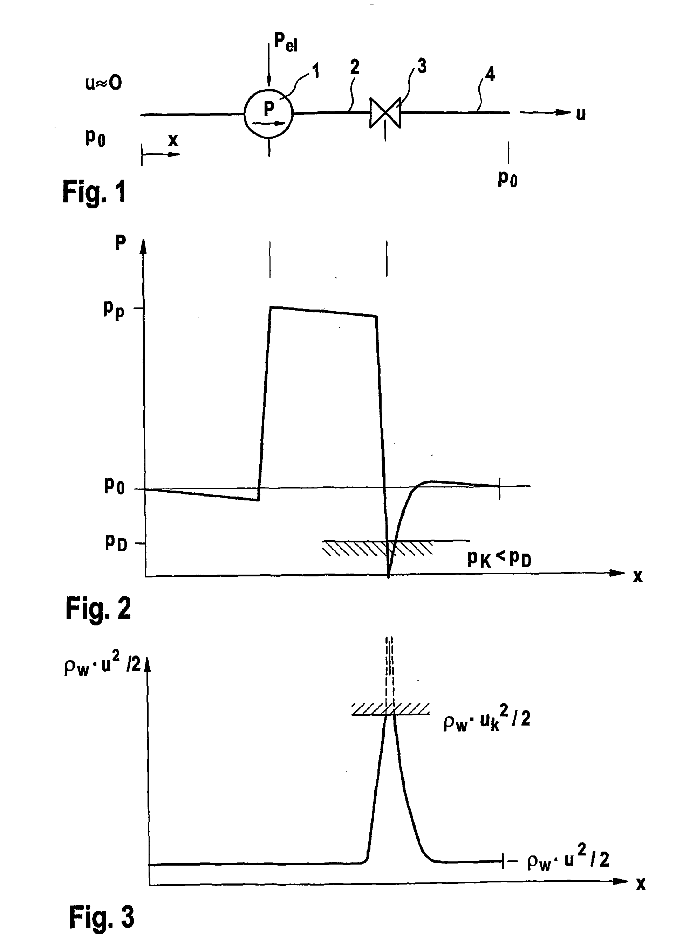

Wesentliches Merkmal der Erfindung ist - physikalisch gesehen - ein Wirkraum, der sich im Zuge der Förderung der zu behandelnden Suspension durch einen Strömungskanal ausbildet. In Fig. 1 ist schematisch angedeutet, wie die Suspension praktisch aus der Ruhe eines Behälters (Anfangsgeschwindigkeit $u \approx 0$) bei Umgebungsdruck $p_0$ mittels einer Pumpe 1 unter Einsatz äußerer Energie/Zeit $P_{el}$ durch eine Rohrleitung 2 in einen Wirkraum 3 einer Desintegrationseinrichtung gefördert wird. In diesem Wirkraum 3 wird das Trägermedium, also das Wasser, durch Aggregatzustandsänderung Phasen extremer Beschleunigung und Verzögerung unterworfen, bevor es diesen danach im anschließenden Strömungskanal 4 mit der Strömungsgeschwindigkeit u bei Umgebungsdruck $p_0$ wieder verlässt.

Erfindungsgemäß wird angestrebt, die Strömungsgeschwindigkeit u im Eintrittsbereich des Wirkraumes 3 so zu steigern, dass in dem Wirkraum selbst keine detaillierten Dampfblasen und keine übliche Kavitation mehr entstehen können, sondern dass ein Übergang zu einer kompletten Dampfströmung erreicht wird, die an der gesamten Oberfläche der Beladung des Trägermediums, also den Mikroorganismen, angreift, so dass auf diese ein Beschleunigungseffekt wirkt, der unmittelbar danach wieder in eine Verzögerung infolge Kondensation des Dampfes übergeht. Durch diesen kombinierten Beschleunigungs- und Verzögerungseffekt, der ins Innere der Mikroorganismen wirkt, wird im Endeffekt deren Zellmembran zerstört und werden Zellplasma sowie Zellkern freigesetzt.

In Fig. 2 sind unter Bezugnahme auf Fig. 1 in einem Druckdiagramm in Abhängigkeit von der Förderstrecke x Anstieg und Abfall des statischen Drucks der Suspension dargestellt. Während der Druck vor der Pumpe 1 dem Umgebungsdruck $p_0$ entspricht, steigt er entsprechend der elektrischen Leistung $P_{ei}$ der Pumpe 1 auf den Betriebsdruck $p_p$ an, um in dem Wirkraum 3 der Desintegrationseinrichtung auf einen Druck $p_K$ abzusinken, der unter dem Dampfdruck $p_D$ des Trägermediums liegt. Nach dem Verlassen des Wirkraumes 3 und der Durchströmung des Kanals 4 stimmt der statische Druck in der Suspension wieder mit dem Umgebungsdruck $p_0$ überein.

Aus Fig. 3, die - wiederum unter Bezugnahme auf Fig. 1 - ein Diagramm der Strömungsgeschwindigkeit in Abhängigkeit von der Förderstrecke zeigt, ist ersichtlich, wie durch die Erhöhung der Fließgeschwindigkeit des Wassers die kinetische Energie/Volumen der Wasserströmung bis auf einen Höchstwert

$$\rho_w \cdot u_K^2/2$$

am Eintritt in den Wirkraum ansteigt, so dass sich in dem Wirkraum infolge des Abfalls des statischen Drucks unter den Dampfdruck die Dampfströmung ausbilden kann. Diese Dampfströmung kann zur Zerkleinerung bzw. Zerstörung der zellularen Strukturen genutzt werden, bevor sie durch Kondensation wieder auf die kinetische Energie/Volumen in der sich anschließenden Rohrleitung 4 abfällt. Hierin bedeuten $\rho_w$ die Dichte des Trägermediums (bei Wasser zum Beispiel $\rho_w = 10 \ kg/m^3$) und $u_K$ die Strömungsgeschwindigkeit beim Eintritt in den Wirkraum.

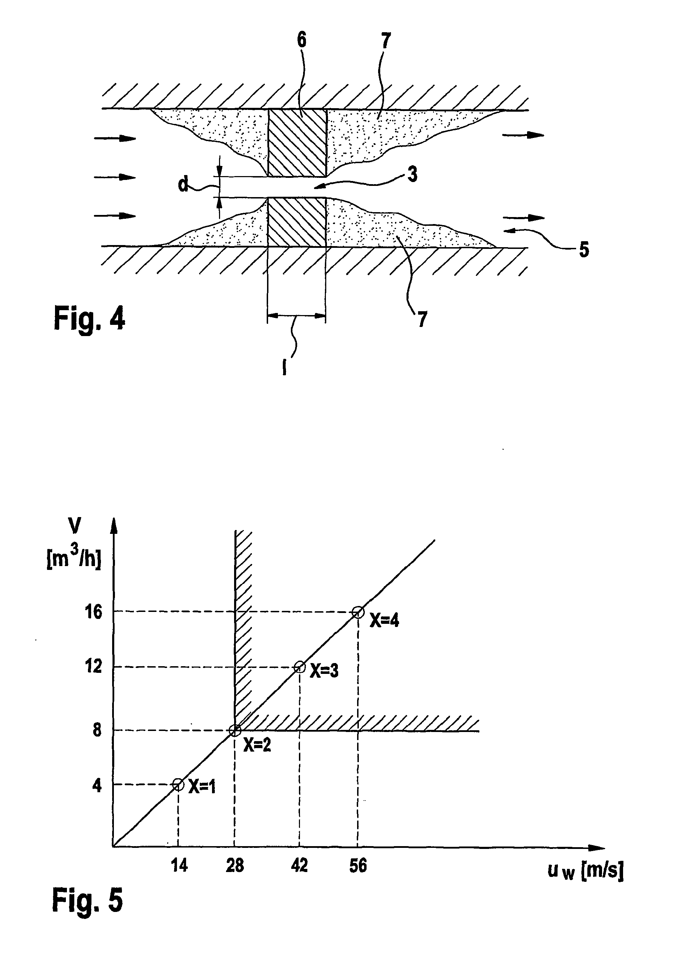

Praktisch lässt sich der die Grundlage der Erfindung bildende Wirkraum 3 durch eine im Strömungskanal 5 angeordnete Drossel oder Blende 6 realisieren, durch welche der Querschnitt des Strömungskanals 5 sehr stark verengt wird (Fig. 4). Durch Erhöhung des Drucks auf die Suspension durch entsprechende Pumpeinheiten und Wahl des Durchmessers d der Drossel lässt sich über die Länge l der Drosselstelle die Strömungsgeschwindigkeit der Suspension so steigern, dass der Dampfpunkt unterschritten wird, dass also das Trägermedium, nämlich Wasser, vollständig in die Dampfphase übergeht.

Je nach Eintrittsgeschwindigkeit der Suspension in den Wirkraum sind die Aufschlussgrade der zellularen Strukturen unterschiedlich; hieraus lassen sich unterschiedliche Behandlungsarten X ableiten, die sich als Multiplikator für eine universelle, gewissermaßen ideale Geschwindigkeit $u_{W,id}$ von etwa 14 m/s definieren lassen. Dies kann anhand eines Diagramms gemäß Fig. 5 erläutert werden.

Die universelle Wassergeschwindigkeit $u_{w,id}$ ist gewissermaßen die "kritische" Geschwindigkeit, bei der sich rein rechnerisch bereits die ersten Kavitationserscheinungen zeigen müssten, die aber, bedingt durch Reibungs- und sonstige Verluste, tatsächlich erst bei etwa dem doppelten Wert, also bei $u_w \approx 28$ m/s auftreten. Hieraus folgt, dass der Zustand X = 1 nur die kritische Geschwindigkeit definiert, so dass erst der Zustand X = 2 mit einer Wassergeschwindigkeit von $u_w \approx 28$ m/s mit dem Beginn der Änderung der Flockenstruktur als Behandlungsstufe bezeichnet werden kann. Die Behandlungsstufe X = 3 mit $u_w \approx 42$ m/s bewirkt bereits eine Beeinflussung der Membranoberflächen mit Freisetzung oberflächenaktiver Stoffe bis hin zur Zerstörung der fadenförmigen Bakterien, während die Behandlungsart X = 4 mit $u_w > \approx 50$ m/s den Beginn von Zellaufschlüssen, d. h. die Zerstörung der Membranen mit Freisetzung der Inhaltsstoffe bewirkt.

Die Öffnungsweite d der Drossel und deren Länge l (Fig. 4) werden zweckmäßig so gewählt, dass insbesondere die Beschleunigungsphase und die Verzögerungsphase zur Zerstörung der Mikroorganismen ausgenutzt werden können. Zugleich kann durch entsprechende Wahl des Verhältnisses von d : l auch der Energieeinsatz minimiert werden. Als vorteilhaft hat sich ein Verhältnis d : l = 1 : 5 erwiesen.

Beim Betrieb einer solchen Anlage werden im Staubereich vor der Drossel und im Entspannungsbereich dahinter im Betrieb der Anlage Ablagerungen entstehen, die in Fig. 4 bei 6 anzudeuten versucht wurde. Eine solche Querschnittsveränderung, die unter Umständen auch geräuschvermindernd wirken kann, ähnelt etwas der bekannten Lavaldüse.

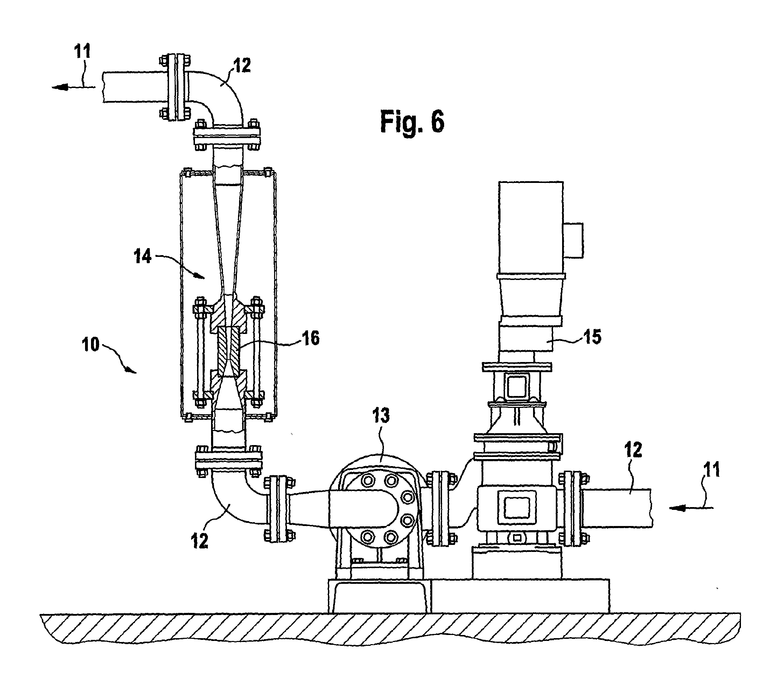

Als Beispiel für die technische Anwendung der Erfindung zeigt Fig. 6 schematisch eine Anlage 10, die Teil eines zweistufigen Desintegrationsverfahrens für Abwasser, Klärschlamm oder dergleichen ist. Eine solche Suspension von Mikroorganismen wird dabei in Richtung des Pfeils 11 durch die Einrichtung 10 gefördert, die aus einer Rohrleitung 12, einer Förderpumpe 13 und einer in erfindungsgemäßer Weise einen Wirkraum umfassenden Desintegrationsvorrichtung 14 besteht.

Vorzugsweise wird als erste Stufe des Desintegrationsverfahrens eine Homogenisierungsvorrichtung, zum Beispiel ein Zerkleinerungsgerät 15, vorgeschaltet, das zu einer möglichst gleichmäßigen Korngrößenverteilung in der Suspension beitragen soll und den Wirkraum vor groben Stoffen schützt. Danach wird die Suspension mittels der Förderpumpe 13 durch die eigentliche Desintegrationsvorrichtung 14 gefördert, wo erfindungsgemäß die gewünschte Zerstörung der Aggregate und der Zellaufschluss bewirkt werden.

In dem Ausführungsbeispiel der Fig. 6 befindet sich der Wirkraum im zentralen Durchgang einer nach Art einer Lavaldüse gestalteten Düse 16 mit entsprechend geringem Querschnitt. Vorteilhafterweise verengt sich der Förderquerschnitt der Rohrleitung 12 stetig auf den geringen Querschnitt, um sich danach in entsprechender Weise wieder zu erweitern. Zweckmäßigerweise befindet sich die Düse 16 in einem vertikal verlaufenden Ast der Rohrleitung 12, um etwaige Auswirkungen der Schwerkraft auf die Vorgänge in dem Wirkraum auszuschließen.

Als Beispiel für die Bemessung der Desintegrationsdüse 16 kann die Behandlung eines Überschussklärschlamms mit 5 - 10 % Trockenmasse und einem Betriebsvolumenstrom $\dot{V}_B$ = 12 m³/h zugrundegelegt werden.

Zur Behandlung der Beladung der Suspension aus Mikroorganismen wird eine Geschwindigkeit $u_{w,B}$ des am Eintritt in den Wirkraum noch flüssigen Trägermediums (Wasser)

$$u_{w,B} = X \cdot u_{w,id}$$

gewählt. Darin bedeuten X den Multiplikator der Behandlungsart und $u_{w,id}$ die für das Trägermedium Wasser universelle Geschwindigkeit von 14 m/s. Die Behandlung des Überschussschlamms soll mit X = 3 durchgeführt werden, die in der Regel die gewünschten biologischen Wirkungen im Faulturm sicherstellt (Fig. 5). Mit der so gewählten Geschwindigkeit

$$u_{w,B} = 42 \text{ m/s}$$

ergibt sich zusammen mit dem vorgegebenen Betriebsvolumenstrom $\dot{V}_B$ = 12 m³/h der erforderliche Durchmesser d des Wirkraums:

$$\dot{V}_B = u_{w,B} \; d^2 \; \pi/4 \;\; \rightarrow \;\;\; d \;\; = \sqrt{\frac{4\dot{V}_B}{u_{w,B}\,\pi}} = 10 \text{ mm}$$

Die Länge des Wirkraums wird mit l = 50 mm so gewählt, dass die Aggregatzustandsänderung des Trägermaterials (Wasser → Wasserdampf) über den ganzen Wirkraum sichergestellt ist und damit die von der Pumpe in das System eingetragene Energie möglichst intensiv im Wirkraum zur Behandlung der Beladung (Mikroorganismen) genutzt wird.

Zur Dimensionierung der Pumpe wird die benötigte Druckerhöhung Δp mit dem Staudruck am Eintritt in den Wirkraum bei Beachtung der Dichte des noch flüssigen Trägermaterials (Wasser) mit $\rho_w$ = 10³ kg/m³ zu

$$\Delta p = \frac{\rho_w}{2} \, u_{w,B}{}^2 = 9 \text{ bar}$$

abgeschätzt und danach die erforderliche hydraulische Leistung mit

$$P_{hyd} = \Delta p \, \dot{V}_B = \frac{\rho_w}{2} \, d^2 \, \frac{\pi}{4} \, u_w{}^3 = \frac{\dot{m}}{2} \, u_w{}^2 = 3 \text{ kW}$$

berechnet. Grundlage der Berechnung ist die Erkenntnis, dass die hydraulische Pumpenleistung letztlich allein zur Erzeugung der erforderlichen Eintrittsgeschwindigkeit $u_{w,B}$ benötigt wird. $P_{hyd}$ entspricht somit der kinetischen Energie/ Zeit der in den Wirkraum eintretenden Strömung.

Mit dem mechanisch-hydraulischen Wirkungsgrad $\eta \approx 0{,}5$ einer beispielsweise einsetzbaren hydrostatischen Schneckenpumpe kann schließlich noch die von der Pumpe aus dem elektrischen Netz entnommene Leistung

$$P = P_{el} = P_{hyd} / \eta = 6 \text{ kW}$$

angegeben werden.

**Patentansprüche**

1. Verfahren zum Zerkleinern partikulärer organischer Substanzen in Suspensionen von Mikroorganismen in einem Trägermedium, insbesondere in Abwässern oder Schlämmen biologischer Kläranlagen, wobei die organischen Substanzen in einem Wirkraum (3)Trägheitskräften infolge kurzzeitiger extremer Beschleunigung und unmittelbar darauffolgender Verzögerung des in einem geschlossenen Strömungskanal strömenden Trägermediums ausgesetzt werden, **dadurch gekennzeichnet, dass** das Trägermedium beim Eintritt in den Wirkraum zum Verdampfen und nachfolgend zum Kondensieren gebracht wird indem die kinetische Energie/Volumen der Wasserströmung bis auf einen Höchstwert $\rho_w \cdot u_K{}^2/2$ am Eintritt in den Wirkraum ansteigt, so dass sich in dem Wirkraum infolge des Abfalls des statischen Druckes unter dem Dampfdruck die Dampfströmung ausbilden kann, worin $\rho_w$ die Dichte des Trägermediums und $u_K$ die Strömungsgeschwindigkeit beim Eintritt in den Wirkraum bedeuten, und in dem Wirkraum selbst keine detaillierten Dampfblasen mehr entstehen und ein Übergang zu einer kompletten Dampfströmung erreicht wird.

2. Verfahren nach Anspruch 1, **dadurch gekennzeichnet, dass** die Änderungen des Aggregatzustandes des Trägermediums durch Änderung der Strömungsgeschwindigkeit erfolgen.

3. Verfahren nach Anspruch 2, **dadurch gekennzeichnet, dass** die Erhöhung der Strömungsgeschwindigkeit durch Verengung des Querschnittes des Strömungskanals erfolgt.

4. Verfahren nach einem der Ansprüche 1 bis 3, **dadurch gekennzeichnet, dass** die Suspension mehrfach nacheinander behandelt wird.

5. Verfahren nach Anspruch 4, **dadurch gekennzeichnet, dass** die Suspension mehrfach durch denselben Wirkraum gefördert wird.

**6.** Verfahren nach einem der Ansprüche 1 bis 5, **dadurch gekennzeichnet, dass** die Suspension durch den Wirkraum mit vertikaler Förderrichtung von unten nach oben gefördert wird.

**7.** Verfahren nach einem der Ansprüche 1 bis 6, **dadurch gekennzeichnet, dass** das Trägermedium eine Strömungsgeschwindigkeit $u_w$ von mindestens 50 m/Sek. hat.

**8.** Verfahren nach einem der Ansprüche 1 bis 7, **dadurch gekennzeichnet, dass** das Trägermedium Wasser ist.

**Claims**

**1.** A method of comminuting particulate organic substances in suspensions of microorganisms in a carrier medium, in particular in waste water or sludges of biological sewage treatment plants, wherein the organic substances are subjected in an operative chamber (3) to inertial forces as a result of short-term extreme acceleration and immediately following deceleration of the carrier medium flowing in a closed flow channel, **characterised in that**, upon entry into the operative chamber, the carrier medium is caused to evaporate and subsequently to condense **in that** the kinetic energy/volume of the water flow increases up to a maximum value $\rho_w \cdot uk^2/2$ at the inlet into the operative chamber so that the vapour flow can develop in the operative chamber as a result of the drop in the static pressure below the vapour pressure, wherein $\rho_w$ signifies the density of the carrier medium and $u_k$ signifies the flow rate upon entry into the operative chamber, and no specific vapour bubbles are formed in the operative chamber and a transition into a complete vapour flow is achieved.

**2.** A method according to Claim 1, **characterised in that** the variations in the aggregate state of the carrier medium are effected by varying the flow rate.

**3.** A method according to Claim 2, **characterised in that** the increase in the flow rate is effected by narrowing the cross-section of the flow channel.

**4.** A method according to any one of Claims 1 to 3, **characterised in that** the suspension is treated several times in succession.

**5.** A method according to Claim 4, **characterised in that** the suspension is fed several times through the same operative chamber.

**6.** A method according to any one of Claims 1 to 5, **characterised in that** the suspension is fed through the operative chamber from the bottom upwards with a vertical feed direction.

**7.** A method according to any one of Claims 1 to 6, **characterised in that** the carrier medium has a flow rate $u_w$ of at least 50 m/sec.

**8.** A method according to any one of Claims 1 to 7, **characterised in that** the carrier medium is water.

**Revendications**

**1.** Procédé pour fractionner des substances organiques particulaires dans des suspensions de microorganismes dans un milieu de support, en particulier dans des eaux usées ou des boues de stations d'épuration biologiques, les substances organiques étant exposées, dans une chambre de travail (3), à des forces d'inertie par suite d'une accélération extrême de courte durée immédiatement suivie d'une décélération du milieu de support qui parcourt un canal d'écoulement fermé, **caractérisé en ce que** le milieu de support est amené à se vaporiser et ensuite à se condenser du fait que l'énergie cinétique/volume de l'écoulement d'eau augmente jusqu'à une valeur maximale $\rho_w \cdot u_K^2/2$ à l'entrée dans la chambre de travail, de sorte que l'écoulement de vapeur peut se former dans la chambre de travail par suite de la chute de la pression statique au-dessous de la pression de vapeur, dans laquelle $\rho_w$ représente la densité du milieu de support et $u_K$ la vitesse d'écoulement à l'entrée dans la chambre de travail, qu'il ne se forme plus de bulles de vapeur détaillées dans la chambre de travail elle-même et que l'on obtient une transition vers un écoulement de vapeur complet.

**2.** Procédé selon la revendication 1, **caractérisé en ce que** les modifications de l'état d'agrégation du milieu de support sont réalisées par modification de la vitesse d'écoulement.

**3.** Procédé selon la revendication 2, **caractérisé en ce que** l'augmentation de la vitesse d'écoulement est réalisée par rétrécissement de la section du canal d'écoulement.

**4.** Procédé selon une des revendications 1 à 3, **caractérisé en ce que** la suspension est traitée plusieurs fois de suite.

**5.** Procédé selon la revendication 4, **caractérisé en ce que** la suspension est transportée plusieurs fois à travers la même chambre de travail.

**6.** Procédé selon une des revendications 1 à 5, **caractérisé en ce que** la suspension est transportée à travers la chambre de travail de bas en haut avec une direction de transport verticale.

**7.** Procédé selon une des revendications 1 à 6, **caractérisé en ce que** le milieu de support a une vitesse d'écoulement $u_w$ d'au moins 50 m/sec.

**8.** Procédé selon une des revendications 1 à 7, **caractérisé en ce que** le milieu de support est de l'eau.

Fig. 1

Fig. 2

Fig. 3

**Fig. 4**

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10214689 A1
- DE 10155161 A1
- US 6200486 B1
- US 5494 A
- US 585 B1
- US 6505648 B1

**In der Beschreibung aufgeführte Nicht-Patentliteratur**

- **N. Dichtl ; J. Müller ; E. Englmann ; F. W. Günthert ; M. Osswald.** Desintegration von Klärschlamm - ein aktueller Überblick. *Korrespondenz Abwasser,* 1997, vol. 44 (10), 1726-1738